# EUROPÄISCHE PATENTSCHRIFT

(11) **EP 2 723 681 B1**
(45) Veröffentlichungstag und Bekanntmachung des Hinweises auf die Patenterteilung: **13.12.2017**
(21) Anmeldenummer: 11734000.0
(22) Anmeldetag: 23.06.2011
(51) Int. Cl.: C01B 25/234, C01B 25/238, G21F 9/00, B01D 21/00

(54) **VERFAHREN UND ANLAGE ZUR DEKONTAMINATION VON PHOSPHORSÄURELÖSUNG**
PROCESS AND PLANT FOR DECONTAMINATING PHOSPHORIC ACID SOLUTION
PROCÉDÉ ET INSTALLATION DE DÉCONTAMINATION D'UNE SOLUTION D'ACIDE PHOSPHORIQUE

(43) Veröffentlichungstag der Anmeldung: 30.04.2014
(73) Patentinhaber: Babcock Noell GmbH, 97080 Würzburg (DE)
(72) Erfinder: EDLER, Gerd, 97332 Volkach (DE); STARKE, Holger, 97261 Güntersleben (DE)
(74) Vertreter: Cohausz & Florack
(86) Internationale Anmeldenummer: PCT/EP2011/003102
(87) Internationale Veröffentlichungsnummer: WO 2012/175098

(56) Entgegenhaltungen:
- EP-A1- 0 327 234
- EP-A1- 0 638 516
- US-A- 4 169 882
- US-A- 4 749 455

## Beschreibung

Die Erfindung betrifft ein Verfahren nach den Merkmalen des ersten Patentanspruches und eine Anlage nach den Merkmalen des Anspruches 7.

Die Erfindung ist überall dort anwendbar, wo bei einer chemischen und/oder elektrochemischen Dekontamination von der Oberfläche radioaktiv verschmutzter Anlagenteile in einer Phosphorsäurelösung Eisen(II)Ionen vorliegen und die Phosphorsäurelösung von den Eisen(II)Ionen zu reinigen ist, damit sie wieder für die Dekontamination radioaktiv verschmutzter Anlagenteile einsetzbar ist.

Die Erfindung ist besonders geeignet für den Einsatz in kleinen und mobilen Anlagen, in denen die Phosphorsäure im Dekontaminationsbad kontinuierlich gereinigt und dem Bad wieder zugeführt wird.

Phosphorsäure-Elektrolyt-Bäder werden zur elektrochemischen Dekontamination seit langem eingesetzt. Nach längerem Einsatz steigen der Eisengehalt und die Aktivität in der Elektrolytlösung an. Bei einer bestimmten Eisenkonzentration im Phosphorsäure-Elektrolyt-Bad von beispielsweise 100 g Fe/Liter wird der Einsatz des Elektrolyten unwirtschaftlich, weil der Dekontaminationserfolg ausbleibt und der Zeitaufwand extrem hoch wird. Deshalb werden die Elektrolyten verworfen und entsorgt. Eine andere Möglichkeit besteht darin, die wäßrige Phosphorsäurelösung des Dekontaminationsbades aufzubereiten und dem Dekontaminationsbad wieder zuzuführen.

Der Dekontaminationseffekt besteht darin, daß von einer Stahlkomponente mittels Phosphorsäure die Oberfläche ca. 0,03 mm tief ab-/aufgelöst wird. Der aufgelöste Stahl bzw. das Eisen ist nicht radioaktiv sondern nur der auf der Oberfläche haftende Schmutz. Dieser wird zusammen mit dem Eisen gefällt, macht aber nur einen minimalen Anteil des Volumens aus.

Bei einem bekannten Verfahren wird chargenweise Phosphorsäurelösung mit wäßriger Oxalsäure gemischt, wobei Eisenoxalat ausfällt und abgetrennt werden kann. Die verdünnte Phosphorsäure wird aufkonzentriert und der Dekontamination wieder zugeführt (rezykliert). Das gebildete Eisenoxalat wird in einer Thermolyse konditioniert.

Die Thermolyse ist eine chemische Reaktion, bei der ein Ausgangsstoff durch Erhitzen in mehrere Produkte zersetzt wird. Im Gegensatz zur thermischen Zersetzung (Pyrolyse) wird die Thermolyse gezielt zur Darstellung definierter Produkte oder reaktiver Zwischenstufen eingesetzt.

Da das Verfahren diskontinuierlich durchgeführt wird, müssen für Reinigung der Phosphorsäurelösung entsprechend große Behältnisse zur Verfügung stehen, was eine entsprechend große Anlage voraussetzt und das Verfahren verteuert. Damit ist insgesamt relativ viel radioaktives Material im Umlauf, was ein höheres Gefährdungspotential nach sich zieht. Mobile Anlagen dieser Art mit kleineren Mengen Phosphorsäure sind wenig rentabel und kaum realisierbar. Ergänzend ist ein Verfahren zur Reinigung von Phosphorsäure durch Abscheidung von Eisen mittels Oxalsäure aus der US 4 169 882 A bekannt.

Es ist daher Aufgabe der Erfindung, ein Verfahren und eine Anlage zur Rezyklierung einer Phosphorsäurelösung aus einem Dekontaminationsbad mit geringem Gefährdungspotential zu entwickeln, bei dem kleinere Mengen der Phosphorsäurelösung im Umlauf sind.

Diese Aufgabe wird durch ein Verfahren nach den Merkmalen des ersten Patentanspruches und eine Anlage nach den Merkmalen des Anspruches 7 gelöst.

Unteransprüche geben vorteilhafte Ausgestaltungen der Erfindung wieder.

Die erfindungsgemäße Lösung sieht ein Verfahren zur Rezyklierung von Phosphorsäurelösung aus einem Dekontaminationsbad vor, die durch radioaktive Anteil verschmutzt ist, wobei die verbrauchte Phosphorsäure mit wäßriger Oxalsäurelösung verdünnt wird, um Eisenoxalat abzutrennen und die Phosphorsäurelösung zur Dekontamination weiterer Anlagenteile einzusetzen.

Erfindungsgemäß wird der Eisenionengehalt in der Phosphorsäure im Dekontaminationsbad kontinuierlich entnommen und gemessen. Die kontinuierliche Entnahme kann durch eine Person oder durch eine Entnahmeeinrichtung erfolgen. Für die Einstellung der Prozessparameter sind die Eisen(II)Ionen relevant, da die ebenfalls in der Flüssigkeit vorhandenen Eisen(III)Ionen nicht gefällt werden und den Prozeß unverändert durchlaufen. Die kontinuierliche Messung kann online, minütlich, stündlich oder tageweise erfolgen.

Erfindungsgemäß wird dem Dekontaminationsbad kontinuierlich Phosphorsäure entnommen und durch konzentrierte gereinigte Phosphorsäure ersetzt, so daß eine bestimmte Konzentration von gelöstem Eisen nicht überschritten wird.

Diese Eisenkonzentration im Dekontaminationsbad sollte bei 40 bis 120 g Fe/Liter, vorzugsweise bei 75 bis 95 g Fe/Liter, liegen.

Vorteilhaft ist es, der mit gelöstem Eisen verunreinigten Phosphorsäure Oxalsäurelösung zuzugeben. Das kann stöchiometrisch oder unterstöchiometrisch erfolgen. Vorteilhaft ist eine unterstöchiometrische Zugabe. Damit wird zwar ein optimaler Wirkungsgrad nicht erreicht, aber verhindert, daß Oxalsäure den gesamten Prozeß unnötig belastet. Die Zugabe kann kontinuierlich, durch eine Person oder durch eine Zugabeeinrichtung erfolgen.

Weiterhin ist es vorteilhaft, das Vermischen von mit gelösten Eisenionen verunreinigter Phosphorsäure und Oxalsäure in einem mehrstufigen Mischprozeß durchzuführen. Geeignet ist ein zwei- bis vierstufiger Mischprozeß. Dieser Mischprozeß kann mittels für den Verfahrenstechniker bekannten Maßnahmen erfolgen. Dazu sind dem Verfahrenstechniker Rührer, Mischer oder für einen Mischprozeß geeignete Aggregate bekannt.

Weiterhin ist es vorteilhaft, wenn der aus der verdünnten Phosphorsäure abgetrennte Eisenoxalatschlamm mit einem Erhitzer kontinuierlich in Eisenoxid, CO₂ und CO getrennt wird.

In einer weiteren Ausführungsvariante ist es vorteilhaft, dem Erhitzer einen Katalysator zur Oxidation von CO zu CO₂ nachzuschalten.

Die erfindungsgemäße Anlage zur Rezyklierung von mit Eisenionen verunreinigter Phosphorsäure besteht aus einem Dekontaminationsbad mit der verunreinigten Phosphorsäure, dem Behälter mit Oxalsäure und dem Absetzbecken.
Die Anlage zeichnet sich durch einen kontinuierlich betriebenen Mischer aus, in dem Oxalsäure und mit Eisenoxid verunreinigte Phosphorsäure gemischt werden.

Weiterhin ist eine Austragseinrichtung nach den Mischkammern des Mischers, beispielsweise ein Überlauf von dem Mischer zum Absetzbecken, angeordnet, wobei dem Absatzbecken kontinuierlich Eisenoxalatschlamm und verdünnte Phosphorsäure entnommen werden.

Vorteilhaft ist es, einen Nachklärtank mit einem Überlauf zum Verdampfer anzuordnen, wobei vom Verdampfer eine Leitung für konzentrierte Phosphorsäure zum Dekontaminationsbad führt.

Die erfindungsgemäße Anlage weist weiterhin einen Bandofen auf, in dem Eisenoxalat kontinuierlich in Eisenoxid, CO₂ und CO zerlegt wird.

Vorteilhaft ist es, wenn die Anlage eine Meßeinrichtung zur kontinuierlichen Messung des Eisenionengehaltes im oder am Dekontaminationsbad aufweist.

Weiterhin ist es vorteilhaft, wenn die Anlage eine Vorrichtung zur kontinuierlichen Zugabe von konzentrierter Phosphorsäure in das Dekontaminationsbad aufweist. Das kann beispielsweise durch eine Dosiereinrichtung, z. B. eine regelbare Pumpe, vorgenommen werden.

Darüber hinaus ist es vorteilhaft, wenn die Anlage eine Vorrichtung zur kontinuierlichen Zugabe von Oxalsäure in den Mischer aufweist.

Die Zugabe von konzentrierter Phosphorsäure und/oder Oxalsäure kann mittels Schwerkraft erfolgen, wenn der Puffertank hoch genug angeordnet ist. Sofern das nicht der Fall ist, ist es vorteilhaft, eine oder mehrere Pumpen anzuordnen.
Um den Mischprozeß mehrstufig durchführen zu können, ist es vorteilhaft, mehrere Mischer mit Mischkammern und Austragseinrichtungen zwischen beispielsweise zwei bis vier Mischern anzuordnen.

Als Austragseinrichtungen in der Anlage sind Überläufe, Pumpen oder Ventile einsetzbar.

Die erfindungsgemäße Lösung hat den Vorteil, daß in einer Anlage zur Rezyklierung einer Phosphorsäurelösung aus einem Dekontaminationsbad nur kleine Mengen der Phosphorsäurelösung im Umlauf sind, wobei das benötigte Arbeitsvolumen in den Anlagetanks erheblich reduziert wird. Daraus resultierend ist es möglich, die Reinigung von Phosphorsäurelösung von Eisen(II)Ionen aus der elektrochemischen Dekontamination mit mobilen Anlagen vorzunehmen.

Im Folgenden soll die Erfindung an einem Ausführungsbeispiel und einer Figur der Anlage näher erläutert werden.

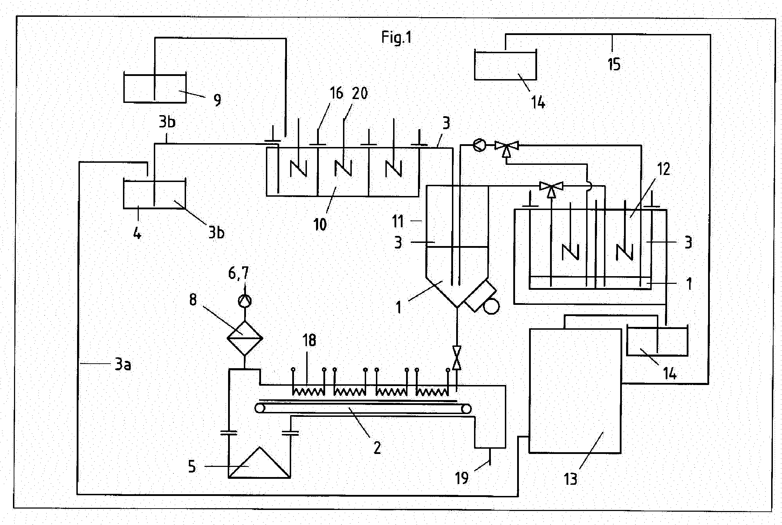

Die Figur zeigt eine Anlage zur Dekontamination von Phosphorsäurelösung 3b, bestehend aus dem Dekontaminationsbad 4, in dem sich Phosphorsäure mit gelöstem Eisen (II) und Eisen (III) befindet. Dieses wird durch die Leitung und eine Pumpe einem mehrstufigen Mischer 10 zugeführt, in dem Rührer 20 angeordnet sind. Aus einem weiteren Behälter wird Oxalsäure 9 in den mehrstufigen Mischer 10 gepumpt. Zwischen den Behälter dem mehrstufigen Mischer 10 sind Überläufe 16 angeordnet. Aus dem Mischer 10 abgepumpt wird verdünnte Phosphorsäure 3, die in den Sedimentationstank 11 gelangt, in dem durch einen Absatzvorgang verdünnte Phosphorsäure 3 und Eisenoxalatschlamm 1 entstehen. Am unteren Teil des Sedimentationstanks 11 befindet sich ein Schwingmechanismus 17. Dieser sorgt dafür, daß der Sedimentationsschlamm sich nicht verfestigt und einwandfrei nach unten ausgetragen werden kann. Unter dem Sedimentationstank 11 ist der Erhitzer angeordnet, der einen Bandofen 2 darstellt, wobei im vorliegenden Fall mehrere Heizelemente 18 über einem Band den feuchten Eisenoxalatschlamm trocknen und thermisch zerlegen, der als Eisenoxid 5 abgeworfen und weiter verarbeitet werden kann. Zur Beschleunigung des Trocknungsvorganges und zur Oxidation wird Zuluft 19 über das Band geleitet, wobei über dem Band ein Filter 8 angeordnet ist, in dem Stäube herausgefiltert werden.

Die verdünnte Phosphorsäure 3 des Sedimentationstanks 11 wird im vorliegenden Beispiel in einen Nachklärtank 12 gepumpt, in dem Restmengen von Eisenoxalatschlamm 1 abgesetzt werden. Aus diesem Nachklärtank 12 wird verdünnte Phosphorsäure 3 in den Puffertank 14 geleitet, nach dem ein Verdampfer 13 angeordnet ist, den konzentrierte Phosphorsäure 3a verläßt, die in das Dekontaminationsbad 4 zurückgeführt wird.

### Liste der verwendeten Bezugszeichen

- 1: Eisenoxalatschlamm
- 2: Erhitzer/Bandofen
- 3: Phosphorsäure, verdünnt
- 3a: Phosphorsäure, konzentriert
- 3b: Phosphorsäure mit gelöstem Eisen(II) und Eisen (III)
- 4: Dekontaminationsbad
- 5: Eisenoxid/Eisenphosphat
- 6: CO₂
- 7: CO
- 8: Filter/Katalysator
- 9: Oxalsäure
- 10: Mehrstufiger Mischer
- 11: Sedimentationstank/Absetzbecken
- 12: Nachklärtank
- 13: Verdampfer
- 14: Puffertank
- 15: Wasser
- 16: Überlauf
- 17: Schwingmechanismus
- 18: Heizung
- 19: Zuluft
- 20: Rührer

## Patentansprüche

1. Verfahren zur Rezyklierung von Phosphorsäurelösung aus einem Dekontaminationsbad (4), die durch radioaktive Anteile verschmutzt ist, wobei die verbrauchte Phosphorsäurelösung mit wäßriger Oxalsäurelösung verdünnt wird, um dabei Eisenoxalat abzutrennen und die Phosphorsäurelösung zur Dekontamination weiterer Anlagenteile eingesetzt wird, **gekennzeichnet dadurch, daß**
- der Eisenionengehalt in der Phosphorsäure (3b) im Dekontaminationsbad (4) kontinuierlich gemessen wird,
- dem Dekontaminationsbad (4) kontinuierlich Phosphorsäure (3b) entnommen und
durch konzentrierte und gereinigte Phosphorsäure (3a) ersetzt wird, so daß eine bestimmte Konzentration von gelöstem Eisen im Kontaminationsbad (4) nicht überschritten wird.

2. Verfahren nach Anspruch 1, **dadurch gekennzeichnet, daß** der Eisenionengehalt in der Phosphorsäure (3b) zwischen 40 bis 120 g Fe/Liter Phosphorsäure (3b) liegt.

3. Verfahren nach Anspruch 2, **dadurch gekennzeichnet, daß** der Eisenionengehalt in der Phosphorsäure (3b)zwischen 75 bis 95 g Fe/Liter Phophorsäure (3b) liegt.

4. Verfahren nach Anspruch 1 bis 3, **dadurch gekennzeichnet, daß** der mit gelöstem Eisen verunreinigten Phosphorsäure (3b) Oxalsäurelösung (9) in dem Maße zugegeben wird, in dem diese gelöstes Eisen enthält.

5. Verfahren nach den Ansprüchen 1 und 2, **dadurch gekennzeichnet, daß** das Vermischen von mit gelöstem Eisenoxid verunreinigter Phosphorsäure (3b) und Oxalsäure (9) in einem mehrstufigen Mischprozeß erfolgt.

6. Verfahren nach einem der Ansprüche 1 bis 3, **dadurch gekennzeichnet, daß** der aus einer verdünnten Phosphorsäure (3) abgetrennte Eisenoxalatschlamm (1) in einem Erhitzer kontinuierlich in Eisenoxid (5), CO₂ (6) und CO (7) getrennt wird.

7. Anlage zur Durchführung eines Verfahrens nach einem der Ansprüche 1 bis 6, bestehend aus dem Dekontaminationsbad (4) mit der verunreinigten Phosphorsäue (3b), dem Behälter mit Oxalsäure (9) und dem Absetzbecken (11), **gekennzeichnet**
**durch**
- einen kontinuierlich betriebenem Mischer (10), in dem Oxalsäure (9) und mit Eisenoxid verunreinigte Phosphorsäure (3b) gemischt werden,
- eine Austragseinrichtung zwischen Mischkammern des Mischers (10),
- eine Austragseinrichtung von dem Mischer (10) zum Absetzbecken (11), dem kontinuierlich Eisenoxalatschlamm (1) und verdünnte Phosphorsäure (3) entnommen werden, und
- einen Bandofen (2), in dem Eisenoxalat (1) kontinuierlich in Eisenoxid, CO₂ (6) und CO (7) zerlegt wird.

8. Anlage nach Anspruch 7, **gekennzeichnet durch** einen Nachklärtank (12) mit Überlauf (19), Pumpe oder Ventil, zu einem Verdampfer (13), von dem eine Leitung für konzentrierte Phosphorsäure (3a) zum Dekontaminationsbad (4) führt.

9. Anlage nach Anspruch 8, **gekennzeichnet durch** einen zwei- bis vierstufigen Mischer (10).

10. Anlage nach den Merkmalen des Anspruches 7, **gekennzeichnet durch** eine Vorrichtung zur kontinuierlichen Zugabe von konzentrierter Phosphorsäure (3a) in das Dekontaminationsbad (4).

11. Anlage nach einem der Ansprüche 7 und 8, **gekennzeichnet durch** eine Vorrichtung zur kontinuierlichen Zugabe von Oxalsäure (9) in den Mischer (10).

12. Anlage nach einem der Ansprüche 7 bis 11, **dadurch gekennzeichnet, daß** die Austrags- oder die Zugabeeinrichtungen eine Pumpe, ein Ventil oder einen Überlauf darstellen.

## Claims

1. Process for recycling phosphoric acid solution from a decontamination bath (4) that is contaminated by radioactive components, wherein the spent phosphoric acid solution is diluted with aqueous oxalic acid solution in order thereby to separate iron oxalate, and the phosphoric acid solution is used for the decontamination of further plant parts, **characterised in that**
- the iron ion content in the phosphoric acid (3b) in the decontamination bath (4) is constantly measured,
- phosphoric acid (3b) is constantly removed from the decontamination bath (4) and is replaced by concentrated and purified phosphoric acid (3a), so that a specified concentration of dissolved iron in the contamination bath (4) is not exceeded.

2. Process according to claim 1, **characterised in that** the iron ion content in the phosphoric acid (3b) is between 40 and 120 g Fe/litre of phosphoric acid (3b).

3. Process according to claim 2, **characterised in that** the iron ion content in the phosphoric acid (3b) is between 75 and 95 g Fe/litre of phosphoric acid (3b).

4. Process according to claim 1 to 3, **characterised in that** oxalic acid solution (9) is added to the phosphoric acid (3b) contaminated with dissolved iron, in the amount in which this contains dissolved iron.

5. Process according to claims 1 and 2, **characterised in that** the mixing of phosphoric acid (3b) contaminated with dissolved iron oxide and oxalic acid (9) takes place in a multi-stage mixing process.

6. Process according to one of claims 1 to 3, **characterised in that** the iron oxalate slurry (1) separated from a dilute phosphoric acid (3) is continuously separated in a heater into iron oxide (5), CO₂ (6) and CO (7).

7. Plant for carrying outing a process according to one of claims 1 to 6, consisting of the decontamination bath (4) with the contaminated phosphoric acid (3b), the container with oxalic acid (9) and the settling tank (11), **characterised by**
- a continuously operating mixer (10) in which oxalic acid (9) and phosphoric acid (3b) contaminated with iron oxide are mixed,
- a discharge device between mixing chambers of the mixer (10),
- a discharge device from the mixer (10) to the settling tank (11), from which iron oxide slurry (1) and dilute phosphoric acid (3) are continuously removed, and
- a conveyor furnace (2), in which iron oxalate (1) is continuously decomposed into iron oxide, CO₂ (6) and CO (7).

8. Plant according to claim 7, **characterised by** a final clarification tank (12) with overflow (19), pump or valve, to an evaporator (13), from which a line for concentrated phosphoric acid (3a) leads to the decontamination bath (4).

9. Plant according to claim 8, **characterised by** a two-stage to four-stage mixer (10).

10. Plant according to the features of claim 7, **characterised by** a device for the continuous addition of concentrated phosphoric acid (3a) to the decontamination bath (4).

11. Plant according to any one of claims 7 and 8, **characterised by** a device for the continuous addition of oxalic acid (9) to the mixer (10).

12. Plant according to any one of claims 7 to 11, **characterised in that** the discharge or feed devices form a pump, a valve or an overflow.

## Revendications

1. Procédé de recyclage d'une solution d'acide phosphorique provenant d'un bain de décontamination (4) qui est polluée par des fractions radioactives, suivant lequel la solution d'acide phosphorique usée est diluée avec une solution aqueuse d'acide oxalique pour séparer à cette occasion l'oxalate de fer et la solution d'acide phosphorique est utilisée pour la décontamination d'autres parties d'installation, **caractérisé en ce que**
- la teneur en ions fer dans l'acide phosphorique (3b) dans le bain de décontamination (4) est mesurée en continu,
- l'acide phosphorique (3b) est retiré en continu du bain de décontamination (4) et est remplacé par de l'acide phosphorique (3a) concentré et purifié de sorte qu'une concentration déterminée de fer dissous dans le bain de décontamination (4) ne soit pas dépassée.

2. Procédé selon la revendication 1, **caractérisé en ce que** la teneur en ions fer dans l'acide phosphorique (3b) se situe entre 40 et 120 g Fe/litre d'acide phosphorique (3b).

3. Procédé selon la revendication 2, **caractérisé en ce que** la teneur en ions fer dans l'acide phosphorique (3b) se situe entre 75 et 95 g Fe/litre d'acide phosphorique (3b).

4. Procédé selon les revendications 1 à 3, **caractérisé en ce que** la solution d'acide oxalique (9) avec de l'acide phosphorique (3b) contaminé avec du fer dissous est ajoutée à la masse qui contient ce fer dissous.

5. Procédé selon les revendications 1 et 2, **caractérisé en ce que** le mélange d'acide phosphorique (3b) contaminé avec de l'oxyde de fer dissous et d'acide oxalique (9) a lieu dans un procédé de mélange à plusieurs étapes.

6. Procédé selon l'une des revendications 1 à 3, **caractérisé en ce que** la boue d'oxalate de fer (1) séparée d'un acide phosphorique dilué (3) est décomposée en continu en oxyde de fer (5), C0₂ (6) et CO (7) dans un réchauffeur.

7. Installation pour l'exécution d'un procédé selon l'une des revendications de 1 à 6, se composant du bain de décontamination (4) avec l'acide phosphorique contaminé (3b), le récipient avec l'acide oxalide (9) et le bassin de décontamination (11), **caractérisée par**
- un mélangeur fonctionnant en continu (10), dans lequel l'acide oxalique (9) et l'acide phosphorique (3b) contaminé avec de l'oxyde de fer sont mélangés,
- un dispositif d'évacuation entre les chambres de mélange du mélangeur (10),
- un dispositif d'évacuation partant du mélangeur (10) vers le bassin de sédimentation (11), à partir duquel sont soutirés en continu de la boue d'oxalate de fer (1) et de l'acide phosphorique dilué (3), et
- un four à bande (2), dans lequel l'oxalate de fer (1) est décomposé en continu en oxyde de fer, C0₂ (6) et CO (7).

8. Procédé selon la revendication 7, **caractérisé par** un réservoir de clarification (12) avec déversoir (19), pompe ou soupape, vers un évaporateur (13), à partir duquel une conduite pour acide phosphorique concentré (3a) conduit au bain de décontamination (4).

9. Procédé selon la revendication 8, **caractérisé par** un mélangeur à deux, trois ou quatre étapes (10).

10. Installation selon les caractéristiques de la revendication 7, **caractérisée par** un dispositif pour l'addition en continu d'acide phosphorique concentré (3a) dans le bain de décontamination (4).

11. Installation selon l'une des revendications 7 et 8, **caractérisée par** un dispositif pour l'addition en continu d'acide oxalide (9) dans le mélangeur (10).

12. Installation selon l'une des revendications 7 à 11, **caractérisée en ce que** les dispositifs d'évacuation et d'amenée sont constitués par une pompe, une soupape ou un déversoir.
